# EUROPEAN PATENT APPLICATION

(11) **EP 4 844 864 A1**
(43) Date of publication of application: **25.11.2026**
(21) Application number: 25882834.2
(22) Date of filing: 12.09.2025
(51) Int. Cl.: H01M 10/0562, H01M 10/052, H01M 10/0585, C01B 25/14

(54) **SULFIDE-BASED SOLID ELECTROLYTE COMPOUND**

(30) Priority: 24.10.2024 KR 20240146529
(71) Applicant: EcoPro BM Co., Ltd, Cheongju-si, Chungcheongbuk-do 28116 (KR)
(72) Inventor: JUNG, Ha Young, Cheongju-si, Chungcheongbuk-do 28116 (KR); YANG, A Reum, Cheongju-si, Chungcheongbuk-do 28116 (KR); KIM, Mi Jin, Cheongju-si, Chungcheongbuk-do 28116 (KR)
(74) Representative: Prüfer & Partner mbB Patentanwälte · Rechtsanwälte
(86) International application number: PCT/KR2025/014202
(87) International publication number: WO 2026/089292

(57) **Abstract**

The present disclosure relates to a sulfide-based solid electrolyte compound and a lithium secondary battery comprising the same, and more specifically, the present disclosure relates to a method of improving the air stability and electrochemical stability of a sulfide-based solid electrolyte having an argyrodite-type crystal structure.

## Description

### BACKGROUND

### 1. Field of the Invention

The present disclosure relates to a sulfide-based solid electrolyte compound, and a solid electrolyte membrane and a lithium secondary battery comprising the same. More specifically, the present disclosure relates to a method of improving the air stability and electrochemical stability of a sulfide-based solid electrolyte having an argyrodite-type crystal structure, and to a sulfide-based solid electrolyte compound, a solid electrolyte membrane, and a lithium secondary battery comprising the same, in which the stability can be improved by forming a LiX crystal phase on at least a part of the surface of the sulfide-based solid electrolyte compound having an argyrodite-type crystal structure to suppress the decomposition reaction of the solid electrolyte.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

However, such an organic electrolyte solution or polymer electrolyte typically uses a flammable organic solvent. Therefore, when an abnormally high temperature occurs due to internal or external factors of the lithium secondary battery, a fire or explosion may occur due to the electrolyte solution.

Owing to such safety problems, solid batteries to which a solid electrolyte is applied as a substitute for liquid-type batteries are drawing attention. Solid batteries have high stability, and their practical application as next-generation batteries having a high energy density is expected. In addition, when a solid electrolyte is introduced in the form of a kind of membrane-type structure, it can replace a separator that is essential for liquid-type batteries.

As a solid electrolyte used in lithium secondary batteries, a sulfide-based solid electrolyte is known. Various crystal structures of sulfide-based solid electrolytes are known, and one of them is an argyrodite-type crystal structure.

However, a solid electrolyte has a lower ionic conductivity than a liquid electrolyte, and there is a problem in that it can be easily deteriorated by a decomposition reaction inside the battery. In addition, there is a problem in that a sulfide-based solid electrolyte may react with moisture and/or oxygen in the air to generate hydrogen sulfide.

Therefore, there is a need to develop a novel compound that has a high ionic conductivity while improving the air stability and electrochemical stability of a sulfide-based solid electrolyte compound.

### SUMMARY OF THE INVENTION

According to the present disclosure, one object is to provide a sulfide-based solid electrolyte compound that is simultaneously excellent in air stability and electrochemical stability, by allowing a LiX crystal phase to remain on at least a part of the surface of a sulfide-based solid electrolyte compound having an argyrodite-type crystal structure, thereby suppressing the reaction between the solid electrolyte and moisture and/or oxygen and, at the same time, improving the ionic conductivity.

In addition, one object of the present disclosure is to provide a solid electrolyte membrane and a lithium secondary battery using the sulfide-based solid electrolyte compound defined herein.

The objects of the present disclosure are not limited to the above-described objects, and other objects and advantages of the present disclosure that are not described can be understood by the following description and will be more clearly understood by the embodiments of the present disclosure. In addition, it is apparent that the objects and advantages of the present disclosure can be realized by the means and combinations thereof indicated in the claims.

According to one aspect of the present disclosure, there is provided a sulfide-based solid electrolyte compound for a lithium-ion battery, comprising a crystal phase of an argyrodite-type crystal structure and comprising a LiX crystal phase on at least a part of a surface thereof, wherein X is at least one selected from the group consisting of F, Cl, Br, and I.

A peak intensity ratio I(200)/I(220) of the (200) plane exhibited by the LiX crystal phase to the (220) plane exhibited by the crystal phase of the argyrodite-type crystal structure may be 0.30 or less.

Here, in the crystal phase of the argyrodite-type crystal structure, the molar ratio Li/P of the lithium (Li) element to the phosphorus (P) element may be more than 5.7 and less than 6.15.

In addition, in the crystal phase of the argyrodite-type crystal structure, the molar ratio S/P of the sulfur (S) element to the phosphorus (P) element may be 4.00 to 6.00.

Meanwhile, the crystal phase of the argyrodite-type crystal structure may comprise two or more kinds of halogen elements.

Here, in the crystal phase of the argyrodite-type crystal structure, the molar ratio X/P of the halogen (X) element to the phosphorus (P) element may be 1.00 to 2.00.

In addition, in the crystal phase of the argyrodite-type crystal structure, the molar ratio (Li+X)/P of the sum of the lithium (Li) element and the halogen (X) element to the phosphorus (P) element may be more than 7.00.

In an embodiment, the crystal phase of the argyrodite-type crystal structure may be represented by the following Chemical Formula 1:

[Chemical Formula 1] Li_{7-x+y}PS₆₋ₓClₓBr_{y}

In Chemical Formula 1, 1≤x≤1.6 and 0<y≤0.4.

In addition, a peak intensity ratio I(200)/I(220) of the (200) plane exhibited by the LiCl crystal phase to the (220) plane exhibited by the crystal phase of the argyrodite-type crystal structure may be 0.30 or less.

In another embodiment, the lattice parameter of the crystal phase of the argyrodite-type crystal structure may be more than 9.439 Å and less than 9.645 Å.

Meanwhile, the sulfide-based solid electrolyte compound for a lithium-ion battery may be obtained by mixing lithium sulfide (Li₂S) powder, phosphorus pentasulfide (P₂S₅) powder, lithium chloride (LiCl) powder, and lithium bromide (LiBr) powder, and sintering the mixture at 350 to 600°C under an inert atmosphere, or at 350 to 650°C under an atmosphere comprising hydrogen sulfide gas.

In addition, the content of the lithium chloride (LiCl) powder may be higher than the content of the lithium bromide (LiBr) powder.

According to another aspect of the present disclosure, there is provided a solid electrolyte membrane comprising the above-described sulfide-based solid electrolyte compound.

According to still another aspect of the present disclosure, there is provided a lithium secondary battery having the above-described solid electrolyte membrane.

### BRIEF DESCRIPTION OF THE DRAWINGS

The objects, features, and advantages of the present disclosure will become more apparent from the following description of exemplary embodiments with reference to the accompanying drawings, in which:
FIG. 1 shows the results of an XRD analysis of a sulfide-based compound according to one example of the present disclosure;
FIG. 2 shows the amount of hydrogen sulfide generated from a sulfide-based compound according to one example of the present disclosure; and
FIG. 3 shows the results of an evaluation of the electrochemical characteristics of a symmetric cell comprising a sulfide-based compound according to one example of the present disclosure.

### DETAILED DESCRIPTION OF EXEMPLARY EMBODIMENTS

For a better understanding of the present disclosure, certain terms are defined herein for convenience. Unless otherwise defined herein, scientific and technical terms used in the present disclosure will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

### Sulfide-based solid electrolyte compound

The sulfide-based solid electrolyte compound according to one aspect of the present disclosure may comprise a crystal phase of an argyrodite-type crystal structure and may comprise a LiX crystal phase on at least a part of a surface thereof.

The sulfide-based solid electrolyte compound has lithium ion conductivity and may have a mixed phase comprising a crystal phase of an argyrodite-type crystal structure and a LiX crystal phase.

The argyrodite-type crystal structure refers to the same structure as argyrodite (Ag₈GeS₆), a silver-germanium-sulfur mineral. The argyrodite-type crystal structure may have an orthorhombic (Pna2₁) phase and a cubic (F-43m) phase, among which the cubic crystal structure may have high lithium ion conductivity. Typically, the argyrodite-type crystal structure exhibits a cubic phase having excellent lithium ion conductivity at a high temperature, and exhibits an orthorhombic phase at a low temperature.

For example, Li₇PS₆, Li₆PS₅X (X is at least one of Cl, Br, and I), and the like are known as lithium-ion-conductive solid electrolyte compounds having an argyrodite-type crystal structure.

However, the argyrodite-type crystal structure has a problem in that it is sensitive to air, humidity, and the like, so that its performance is easily degraded. In addition, a compound having an argyrodite-type crystal structure can be easily decomposed upon reaction with lithium due to its narrow potential window.

In contrast, the sulfide-based solid electrolyte compound comprises a LiX phase having a relatively wide and stable potential window, and can thereby suppress the decomposition reaction of the compound at an interface. Therefore, a secondary battery using the sulfide-based solid electrolyte compound can exhibit a stable cycle behavior.

The LiX phase may be formed by introducing an excess amount of LiX (X is at least one of Cl, Br, and I) during the manufacture of the sulfide-based solid electrolyte compound so as to allow the LiX to remain. In this case, by using two or more compounds as the LiX rather than a single compound, one of the two may be allowed to remain.

Here, the excess amount may mean that (Li+X)/P, which is the sum of the molar ratio Li/P of the lithium (Li) element to the phosphorus (P) element and the molar ratio X/P of the halogen (X) element to the phosphorus (P) element, is more than 7.

A peak intensity ratio I(200)/I(220) of the (200) plane exhibited by the LiX crystal phase to the (220) plane exhibited by the crystal phase of the argyrodite-type crystal structure may be 0.30 or less, for example, 0.30, 0.29, 0.28, 0.27, 0.26, 0.25, 0.24, 0.23, 0.22, 0.21, 0.20, 0.19, 0.18, 0.17, 0.16, 0.15, 0.14, 0.13, 0.12, 0.11, 0.10, 0.09, 0.08, 0.07, 0.06, 0.05, 0.04, 0.03, 0.02, 0.01, or a range between two of these values, but is not limited thereto.

In an XRD analysis using a Cu target, the (220) plane may appear at around 2θ=25.2, and the (200) plane may appear at around 2θ=34.9. When the peak intensity ratio exhibited by the argyrodite-type crystal phase and the LiX crystal phase satisfies the above-described range, it is possible to prevent the problem of a decrease in the ionic conductivity or a decrease in the air stability of the solid electrolyte.

Here, in the crystal phase of the argyrodite-type crystal structure, the molar ratio Li/P of the lithium (Li) element to the phosphorus (P) element may be more than 5.7 and less than 6.15, for example, 5.71, 5.72, 5.73, 5.74, 5.75, 5.76, 5.77, 5.78, 5.79, 5.80, 5.81, 5.82, 5.83, 5.84, 5.85, 5.86, 5.87, 5.88, 5.89, 5.90, 5.91, 5.92, 5.93, 5.94, 5.95, 5.96, 5.97, 5.98, 5.99, 6.00, 6.01, 6.02, 6.03, 6.04, 6.05, 6.06, 6.07, 6.08, 6.09, 6.10, 6.11, 6.12, 6.13, 6.14, 6.15, or a range between two of these values, but is not limited thereto.

When the value of Li/P is outside the above range, the arrangement and distribution ratio of lithium ions inside the compound change, so that the ionic conductivity may be lowered.

In addition, in the crystal phase of the argyrodite-type crystal structure, the molar ratio S/P of the sulfur (S) element to the phosphorus (P) element may be 4.00 to 6.00, for example, 4.00, 4.05, 4.10, 4.15, 4.20, 4.25, 4.30, 4.35, 4.40, 4.45, 4.50, 4.55, 4.60, 4.65, 4.70, 4.75, 4.80, 4.85, 4.90, 4.95, 5.00, 5.05, 5.10, 5.15, 5.20, 5.25, 5.30, 5.35, 5.40, 5.45, 5.50, 5.55, 5.60, 5.65, 5.70, 5.75, 5.80, 5.85, 5.90, 5.95, 6.00, or a range between two of these values, but is not limited thereto.

When the S/P value satisfies the above range, the chemical stability and high ionic conductivity of the compound can be secured in a balanced manner.

In the argyrodite-type crystal structure, replacing sulfur with a halogen anion stabilizes the cubic phase, so that a cubic structure can be obtained even at room temperature.

The substituted halogen element forms a vacancy at a Li site inside the argyrodite unit cell, thereby reducing the activation energy to form a new lithium ion conduction path, and as a result, the lithium ion conductivity can be improved.

Meanwhile, the crystal phase of the argyrodite-type crystal structure may comprise two or more kinds of halogen elements. As halogen elements, F, Cl, Br, I, and the like exist, but Cl, Br, I, and the like can typically be used in a compound having an argyrodite-type crystal structure.

Here, in the crystal phase of the argyrodite-type crystal structure, the molar ratio X/P of the halogen (X) element to the phosphorus (P) element may be 1.00 to 2.00, for example, 1.00, 1.02, 1.04, 1.06, 1.08, 1.10, 1.12, 1.14, 1.16, 1.18, 1.20, 1.22, 1.24, 1.26, 1.28, 1.30, 1.32, 1.34, 1.36, 1.38, 1.40, 1.42, 1.44, 1.46, 1.48, 1.50, 1.52, 1.54, 1.56, 1.58, 1.60, 1.62, 1.64, 1.66, 1.68, 1.70, 1.72, 1.74, 1.76, 1.78, 1.80, 1.82, 1.84, 1.86, 1.88, 1.90, 1.92, 1.94, 1.96, 1.98, 2.00, or a range between two of these values, but is not limited thereto.

In an embodiment, in the crystal phase of the argyrodite-type crystal structure, the molar ratio (Li+X)/P of the sum of the lithium (Li) element and the halogen (X) element to the phosphorus (P) element may be more than 7.00, for example, 7.01, 7.02, 7.03, 7.04, 7.05, 7.06, 7.07, 7.08, 7.09, 7.10, 7.11, 7.12, 7.13, 7.14, 7.15, 7.16, 7.17, 7.18, 7.19, 7.20, 7.21, 7.22, 7.23, 7.24, 7.25, 7.26, 7.27, 7.28, 7.29, 7.30, 7.31, 7.32, 7.33, 7.34, 7.35, 7.36, 7.37, 7.38, 7.39, 7.40, 7.41, 7.42, 7.43, 7.44, 7.45, 7.46, 7.47, 7.48, 7.49, 7.50, or a range between two of these values, but is not limited thereto.

Here, when the halogen (X) element comprises Cl and Br, the content of Cl may be higher than the content of Br.

In addition, the content of the Br may be 0.05 to 0.4 mol based on 1 mol of the phosphorus (P) element, for example, 0.05 mol, 0.06 mol, 0.07 mol, 0.08 mol, 0.09 mol, 0.1 mol, 0.11 mol, 0.12 mol, 0.13 mol, 0.14 mol, 0.15 mol, 0.16 mol, 0.17 mol, 0.18 mol, 0.19 mol, 0.2 mol, 0.21 mol, 0.22 mol, 0.23 mol, 0.24 mol, 0.25 mol, 0.26 mol, 0.27 mol, 0.28 mol, 0.29 mol, 0.3 mol, 0.31 mol, 0.32 mol, 0.33 mol, 0.34 mol, 0.35 mol, 0.36 mol, 0.37 mol, 0.38 mol, 0.39 mol, 0.4 mol, or a range between two of these values, but is not limited thereto.

In an embodiment, the crystal phase of the argyrodite-type crystal structure may be represented by the following Chemical Formula 1:

[Chemical Formula 1] Li_{7-x+y}PS₆₋ₓClₓBr_{y}

In Chemical Formula 1, 1≤x≤1.6 and 0<y≤0.4. For example, the x may be 1, 1.02, 1.04, 1.06, 1.08, 1.1, 1.12, 1.14, 1.16, 1.18, 1.2, 1.22, 1.24, 1.26, 1.28, 1.3, 1.32, 1.34, 1.36, 1.38, 1.4, 1.42, 1.44, 1.46, 1.48, 1.5, 1.52, 1.54, 1.56, 1.58, 1.6, or a value between two of these values, and the y may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, or a value between two of these values, but is not limited thereto.

In addition, a peak intensity ratio I(200)/I(220) of the (200) plane exhibited by the LiCl crystal phase to the (220) plane exhibited by the crystal phase of the argyrodite-type crystal structure, which comprises Cl and Br while having a content of Cl higher than that of Br, may be 0.30 or less, for example, 0.30, 0.29, 0.28, 0.27, 0.26, 0.25, 0.24, 0.23, 0.22, 0.21, 0.20, 0.19, 0.18, 0.17, 0.16, 0.15, 0.14, 0.13, 0.12, 0.11, 0.10, 0.09, 0.08, 0.07, 0.06, 0.05, 0.04, 0.03, 0.02, 0.01, or a range between two of these values, but is not limited thereto.

As such, when the molar ratio of Cl to Br and the value of I(200)/I(220) satisfy the above-described ranges, LiCl remains on at least a part of the surface of the compound to suppress the decomposition reaction of the solid electrolyte at an interface, while reducing the generation of hydrogen sulfide caused by substances present in the air. In addition, a high ionic conductivity can be maintained even after contact with air.

In another embodiment, the lattice parameter of the crystal phase of the argyrodite-type crystal structure may be more than 9.439 Å and less than 9.645 Å, for example, 9.440 Å, 9.445 Å, 9.450 Å, 9.455 Å, 9.460 Å, 9.465 Å, 9.470 Å, 9.475 Å, 9.480 Å, 9.485 Å, 9.490 Å, 9.495 Å, 9.500 Å, 9.505 Å, 9.510 Å, 9.515 Å, 9.520 Å, 9.525 Å, 9.530 Å, 9.535 Å, 9.540 Å, 9.545 Å, 9.550 Å, 9.555 Å, 9.560 Å, 9.565 Å, 9.570 Å, 9.575 Å, 9.580 Å, 9.585 Å, 9.590 Å, 9.595 Å, 9.600 Å, 9.605 Å, 9.610 Å, 9.615 Å, 9.620 Å, 9.625 Å, 9.630 Å, 9.635 Å, 9.640 Å, 9.644 Å, or a range between two of these values, but is not limited thereto.

A compound comprising an argyrodite-type crystal phase whose lattice parameter satisfies the above-described range may be one in which a halogen anion is substituted at a position of a sulfur anion to form a lithium conduction path.

Meanwhile, the sulfide-based solid electrolyte compound for a lithium-ion battery may be obtained by mixing lithium sulfide (Li₂S) powder, phosphorus pentasulfide (P₂S₅) powder, lithium chloride (LiCl) powder, and lithium bromide (LiBr) powder, and sintering the mixture at a temperature of 350 to 600°C under an inert atmosphere, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C, 600°C, or a range between two of these values, or by sintering at a temperature of 350 to 650°C under an atmosphere comprising hydrogen sulfide gas, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C, 600°C, 605°C, 610°C, 615°C, 620°C, 625°C, 630°C, 635°C, 640°C, 645°C, 650°C, or a range between two of these values.

Here, each component may be stoichiometrically calculated and mixed so as to have the composition of the above-described Chemical Formula 1.

In addition, the sintering temperature and atmosphere may be applied differently depending on the target composition.

In addition, the content of the lithium chloride (LiCl) powder may be higher than the content of the lithium bromide (LiBr) powder. A compound of this form can have a high ionic conductivity while being excellent in stability.

Meanwhile, an excess amount of the lithium bromide powder may be added to allow the lithium chloride (LiCl) phase to remain on the surface of the sulfide-based solid electrolyte compound. For example, the lithium bromide powder may be introduced such that a value obtained by dividing the total number of moles of the lithium (Li) element, the chlorine (Cl) element, and the bromine (Br) element by the number of moles of the phosphorus (P) element is more than 7.

### Solid electrolyte membrane

According to another aspect of the present disclosure, there is provided a solid electrolyte membrane comprising the above-described sulfide-based solid electrolyte compound.

Here, the solid electrolyte membrane may mean that a sulfide-based solid electrolyte compound, which is a kind of solid-phase material capable of ionic conduction, is formed in a membrane-type structure.

The solid electrolyte membrane may be manufactured according to a conventional method known in the art. For example, the solid electrolyte membrane may be manufactured by press-molding a powder of the sulfide-based solid electrolyte compound and then processing it into a required shape.

However, since it is difficult to maintain a membrane-type structure with the sulfide-based compound alone, the solid electrolyte membrane may be manufactured by mixing a binder.

Here, as the binder, one that has excellent binding strength to the sulfide-based compound, has no decrease in ionic conductivity, and has excellent flexibility is preferable. In addition, it should be easily peelable from a release film typically used in the manufacture of a solid electrolyte membrane.

For example, polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof may be mentioned, and one or a mixture of two or more thereof may be used.

A solid electrolyte membrane of this form may be manufactured by applying a slurry comprising the sulfide-based compound, the binder, and a solvent onto a release film, and then removing the solvent.

In addition, the solid electrolyte membrane may further comprise a conductive material, an auxiliary binder, and the like, as needed.

The conductive material is used to impart conductivity so as to enable electron transfer accompanying the movement of ions, and its kind is not limited as long as it has electron conductivity without an unnecessary chemical reaction. For example, there are graphite, carbon black, acetylene black, Ketjen black, furnace black, lamp black, thermal black, a carbon fiber, a carbon nanotube, graphene, copper, aluminum, nickel, gold, silver, a conductive polymer, and the like.

In the solid electrolyte membrane, the content of the sulfide-based solid electrolyte compound may be 80 to 99.9 wt%, for example, 80 wt%, 80.5 wt%, 81 wt%, 81.5 wt%, 82 wt%, 82.5 wt%, 83 wt%, 83.5 wt%, 84 wt%, 84.5 wt%, 85 wt%, 85.5 wt%, 86 wt%, 86.5 wt%, 87 wt%, 87.5 wt%, 88 wt%, 88.5 wt%, 89 wt%, 89.5 wt%, 90 wt%, 90.5 wt%, 91 wt%, 91.5 wt%, 92 wt%, 92.5 wt%, 93 wt%, 93.5 wt%, 94 wt%, 94.5 wt%, 95 wt%, 95.5 wt%, 96 wt%, 96.5 wt%, 97 wt%, 97.5 wt%, 98 wt%, 98.5 wt%, 99 wt%, 99.5 wt%, 99.9 wt%, or a range between two of these values, but is not limited thereto.

Here, the thickness of the solid electrolyte membrane is not limited, and may be 5 to 300 µm, for example, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, 165 µm, 170 µm, 175 µm, 180 µm, 185 µm, 190 µm, 195 µm, 200 µm, 205 µm, 210 µm, 215 µm, 220 µm, 225 µm, 230 µm, 235 µm, 240 µm, 245 µm, 250 µm, 255 µm, 260 µm, 265 µm, 270 µm, 275 µm, 280 µm, 285 µm, 290 µm, 295 µm, 300 µm, or a range between two of these values.

Meanwhile, the solid electrolyte membrane may have a free-standing characteristic that allows it to be used without a separate support, but is not limited thereto.

### Lithium secondary battery

According to still another aspect of the present disclosure, there may be provided a lithium secondary battery having the above-described solid electrolyte membrane.

The above-described solid electrolyte membrane may be disposed as a separate layer (solid electrolyte layer) between a positive electrode and a negative electrode. In addition, the solid electrolyte may be partly comprised in the positive electrode active material layer of the positive electrode independently of the solid electrolyte layer, or the solid electrolyte may be partly comprised in the negative electrode active material layer of the negative electrode independently of the solid electrolyte layer.

That is, the lithium secondary battery may specifically comprise a positive electrode, a negative electrode located opposite to the positive electrode, and a solid electrolyte membrane interposed between the positive electrode and the negative electrode. Here, since the solid electrolyte membrane is the same as described above, a detailed description thereof is omitted for convenience, and hereinafter, only the remaining components not described above will be described in detail.

The lithium secondary battery may optionally further comprise a battery case accommodating an electrode assembly of the positive electrode, the negative electrode, and the solid electrolyte membrane, and a sealing member for sealing the battery case.

The positive electrode may comprise a positive electrode current collector and a positive electrode active material layer disposed on the positive electrode current collector.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

As the positive electrode active material, a compound capable of reversible intercalation/deintercalation of lithium can be used. For example, there are cobalt oxide-based (LCO), nickel oxide-based (LNO), manganese oxide-based (LMO), nickel-cobalt-manganese oxide-based (NCM), nickel-cobalt-aluminum oxide-based (NCA), iron phosphate-based (LFP), and those doped and/or coated thereon, and the like, but are not limited thereto.

The positive electrode active material layer can be manufactured by applying, to the positive electrode current collector, a positive electrode slurry composition comprising the positive electrode active material together with a conductive material and, optionally as needed, a binder.

Meanwhile, the positive electrode active material may be included at 80 wt% to 99 wt%, more specifically 85 wt% to 98.5 wt%, with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode can be manufactured according to a conventional positive electrode manufacturing method. Specifically, it can be manufactured by applying a positive electrode slurry composition, which is prepared by dissolving or dispersing a sulfide-based compound, a positive electrode active material, a binder, and a conductive material in a solvent, onto a positive electrode current collector, followed by drying and rolling.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Since the lithium secondary battery comprising the solid electrolyte membrane according to the present disclosure exhibits stable cycle characteristics without an increase in overvoltage, it is useful in portable devices such as a mobile phone, a notebook computer and a digital camera, and in an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed to be limited by these examples.

### Preparation Example 1. Preparation of sulfide-based compound

### Comparative Example 1

In a drying room (DP -60°C), a lithium precursor Li₂S, a phosphorus precursor P₂S₅, and a chlorine precursor LiCl were weighed and mixed in stoichiometric proportions so as to obtain a target composition of Li_{5.7}PS_{4.7}Cl_{1.3}.

The mixture was placed in a crucible comprising Al₂O₃, and then sintering was performed. In order to suppress a reaction with the gas present inside the sintering furnace, the temperature was raised to a maximum temperature of 570°C while flowing N₂ gas as an inert gas, and heat treatment was performed to carry out sintering, thereby preparing the sulfide-based compound of Comparative Example 1.

### Comparative Example 2

A sulfide-based compound was prepared in the same manner as in Comparative Example 1, except that, in a drying room (DP -60°C), a lithium precursor Li₂S, a phosphorus precursor P₂S₅, a chlorine precursor LiCl, and a bromine precursor LiBr were weighed so as to obtain a target composition of Li_{6.15}PS_{4.7}Cl_{1.3}Br_{0.45}.

### Example 1

A sulfide-based compound was prepared in the same manner as in Comparative Example 1, except that, in a drying room (DP -60°C), a lithium precursor Li₂S, a phosphorus precursor P₂S₅, a chlorine precursor LiCl, and a bromine precursor LiBr were weighed so as to obtain a target composition of Li_{5.775}PS_{4.7}Cl_{1.3}Br_{0.075}.

### Example 2

A sulfide-based compound was prepared in the same manner as in Comparative Example 1, except that, in a drying room (DP -60°C), a lithium precursor Li₂S, a phosphorus precursor P₂S₅, a chlorine precursor LiCl, and a bromine precursor LiBr were weighed so as to obtain a target composition of Li_{5.85}PS_{4.7}Cl_{1.3}Br_{0.15}.

### Experimental Example 1. Characterization of sulfide-based compounds

For the sulfide-based compounds prepared according to Preparation Example 1, the composition, the ionic conductivity before and after exposure to air, the lattice parameter, and the peak intensity ratio I(200)/I(220) of the (200) plane of the LiCl crystal phase to the (220) plane of the argyrodite-type crystal phase were measured and are shown in Table 1 below.

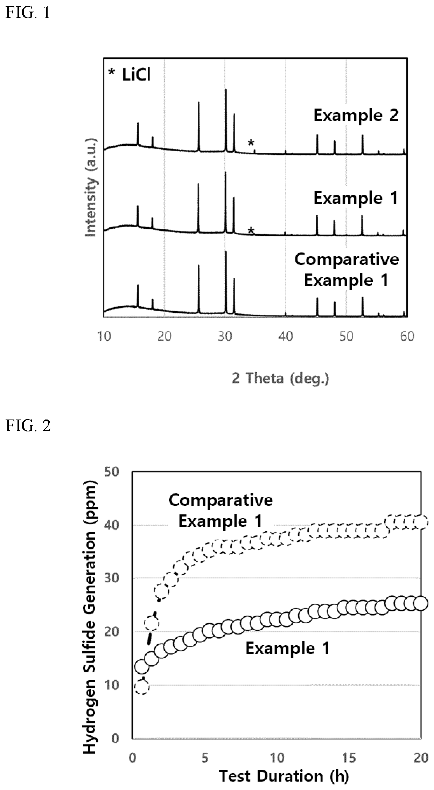

The XRD analysis was performed using a Bruker D8 Advance diffractometer with Cu-Kα radiation (1.540598 Å), and the results are shown in FIG. 1.

To evaluate the air stability, air having a controlled dew point (DP -40°C) was flowed over the sulfide-based compound at room temperature, and the amount of hydrogen sulfide generated was measured with a hydrogen sulfide sensor and is shown in FIG. 2; the ionic conductivity of the sulfide-based compound was measured before and after the evaluation, respectively.

**[Table 1]**

| Classification | | | Comp. Ex. 1 | Comp. Ex. 2 | Example 1 | Example 2 |
|---|---|---|---|---|---|---|
| Composition | Li | mol | 5.7 | 6.15 | 5.775 | 5.85 |
| | P | | 1 | 1 | 1 | 1 |
| | S | | 4.7 | 4.7 | 4.7 | 4.7 |
| | Cl | | 1.3 | 1.3 | 1.3 | 1.3 |
| | Br | | - | 0.45 | 0.075 | 0.15 |
| Ionic conductivity (before exposure) | | mS/cm | 3.78 | 2.54 | 3.86 | 4.15 |
| Ionic conductivity (after exposure) | | mS/cm | 0.95 | 0.65 | 1.54 | 1.79 |
| Lattice parameter | | Å | 9.439 | 9.645 | 9.469 | 9.501 |
| I(200)/I(220) | | - | 0.00 | 0.31 | 0.05 | 0.09 |

Referring to Table 1, Comparative Example 1, which contains no bromine, and Comparative Example 2, in which the bromine ratio is excessively high, rather exhibited a lower ionic conductivity than the Examples. In particular, this difference appeared more clearly after the air stability evaluation. In particular, although Comparative Example 2 comprised residual LiCl, its ionic conductivity sharply decreased after exposure to air.

Referring to FIG. 1 and Table 1, it can be confirmed that, in the sulfide-based compounds of Comparative Example 2, Example 1, and Example 2, LiCl remained owing to the excess amount of LiBr.

Referring to FIG. 2, owing to the influence of the residual LiCl, the amount of hydrogen sulfide generated was reduced in Example 1 compared to Comparative Example 1.

### Preparation Example 2. Preparation of solid electrolyte membrane and lithium secondary battery (symmetric cell)

A pressure cell was prepared by applying a pressure of 200 MPa uniaxially to 200 mg of the sulfide-based compound of each of the Comparative Examples and the Examples. At this time, Li metal was inserted on both ends of the solid electrolyte to prepare a lithium secondary battery symmetric cell having a Li/sulfide-based compound/Li electrode structure.

### Experimental Example 2. Evaluation of electrochemical characteristics of lithium secondary battery (symmetric cell)

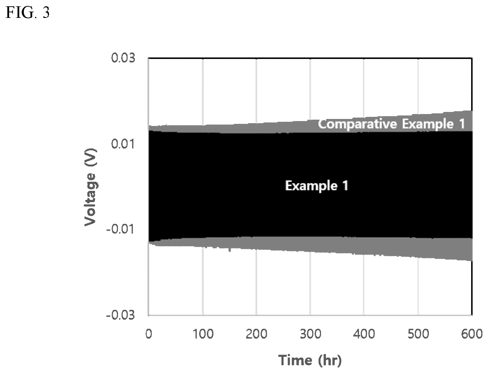

The lithium secondary battery (symmetric cell) prepared in Preparation Example 2 was evaluated using a TOSCAT-3100 instrument from Toyo. At this time, a current of 0.25 mA per unit area was applied to perform an evaluation of 300 cycles. Stripping/plating (1 hr each) was repeated per cycle to evaluate the electrochemical stability of the solid electrolyte, and the results are shown in FIG. 3.

Typically, owing to the narrow potential window of the solid electrolyte, a decomposition reaction of the solid electrolyte occurs at an interface between the lithium electrode and the solid electrolyte. However, referring to FIG. 3, in the symmetric cell of Example 1 in which LiCl having a relatively wide and stable potential window compared to the solid electrolyte remained, the interfacial decomposition reaction was suppressed, and a stable cycle behavior was exhibited without an increase in the overvoltage on the y-axis.

According to the present disclosure, a LiX crystal phase is mixed on at least a part of the surface of an argyrodite-type sulfide-based solid electrolyte compound to improve the air stability and electrochemical stability, and a lithium secondary battery comprising the same can exhibit a stable cycle behavior without an increase in overvoltage even during long-term use.

In addition to the above-described effects, specific effects of the present disclosure are described while explaining specific details for the present disclosure.

Although embodiments of the present disclosure have been described above, those skilled in the art can make various modifications and changes to the present disclosure by adding, changing, or deleting components without departing from the spirit of the present disclosure as set forth in the claims, which will be included within the scope of rights of the present disclosure.

## Claims

1. A sulfide-based solid electrolyte compound, comprising:
a crystal phase of an argyrodite-type crystal structure; and
a LiX crystal phase on at least a part of a surface thereof,
wherein X is at least one selected from the group consisting of F, Cl, Br, and I.

2. The sulfide-based solid electrolyte compound of claim 1, wherein a peak intensity ratio I(200)/I(220) of the (200) plane exhibited by the LiX crystal phase to the (220) plane exhibited by the crystal phase of the argyrodite-type crystal structure is 0.30 or less.

3. The sulfide-based solid electrolyte compound of claim 1, wherein, in the crystal phase of the argyrodite-type crystal structure, a molar ratio Li/P of a lithium (Li) element to a phosphorus (P) element is more than 5.7 and less than 6.15.

4. The sulfide-based solid electrolyte compound of claim 1, wherein, in the crystal phase of the argyrodite-type crystal structure, a molar ratio S/P of a sulfur (S) element to a phosphorus (P) element is 4.00 to 6.00.

5. The sulfide-based solid electrolyte compound of claim 1, wherein the crystal phase of the argyrodite-type crystal structure comprises two or more kinds of halogen elements.

6. The sulfide-based solid electrolyte compound of claim 1, wherein, in the crystal phase of the argyrodite-type crystal structure, a molar ratio X/P of a halogen (X) element to a phosphorus (P) element is 1.00 to 2.00.

7. The sulfide-based solid electrolyte compound of claim 6, wherein, in the crystal phase of the argyrodite-type crystal structure, a molar ratio (Li+X)/P of a sum of a lithium (Li) element and a halogen (X) element to a phosphorus (P) element is more than 7.00.

8. The sulfide-based solid electrolyte compound of claim 1, wherein the crystal phase of the argyrodite-type crystal structure is represented by the following Chemical Formula 1:
[Chemical Formula 1] Li_{7-x+y}PS₆₋ₓClₓBr_{y}
wherein, in Chemical Formula 1,
1≤x≤1.6 and 0<y≤0.4.

9. The sulfide-based solid electrolyte compound of claim 8, wherein a peak intensity ratio I(200)/I(220) of the (200) plane exhibited by the LiCl crystal phase to the (220) plane exhibited by the crystal phase of the argyrodite-type crystal structure is 0.30 or less.

10. The sulfide-based solid electrolyte compound of claim 1, wherein a lattice parameter of the crystal phase of the argyrodite-type crystal structure is more than 9.439 Å and less than 9.645 Å.

11. The sulfide-based solid electrolyte compound of claim 1, which is obtained by mixing lithium sulfide (Li₂S) powder, phosphorus pentasulfide (P₂S₅) powder, lithium chloride (LiCl) powder, and lithium bromide (LiBr) powder, and sintering the mixture at 350 to 600°C under an inert atmosphere, or at 350 to 650°C under an atmosphere comprising hydrogen sulfide gas.

12. The sulfide-based solid electrolyte compound of claim 11, wherein a content of the lithium chloride (LiCl) powder is higher than a content of the lithium bromide (LiBr) powder.

13. A solid electrolyte membrane comprising the sulfide-based solid electrolyte compound according to any one of claims 1 to 12.

14. A lithium secondary battery comprising the solid electrolyte membrane according to claim 13.
